# EUROPÄISCHE PATENTANMELDUNG

(11) **EP 2 060 910 A1**
(43) Veröffentlichungstag der Anmeldung: **20.05.2009**
(21) Anmeldenummer: 08105592.3
(22) Anmeldetag: 16.10.2008
(51) Int. Cl.: G01N 27/12, D06F 58/28, G01R 27/02

(54) **Messvorrichtung und Verfahren zum Bestimmen eines elektrischen Widerstands von Wäschestücken**

(30) Priorität: 06.11.2007 DE 102007052836
(71) Anmelder: BSH Bosch und Siemens Hausgeräte GmbH, 81739 München (DE)
(72) Erfinder: Gorny, Piotr, 13581, Berlin (DE); Sattler, Guido, 14612, Falkensee (DE); Volkers, Henrik, 38124, Braunschweig (DE)
(74) Vertreter: Gemünden, Bernd

(57) **Zusammenfassung**

Die Erfindung betrifft eine Messvorrichtung sowie ein Verfahren zum Bestimmen eines elektrischen Widerstands von Wäschestücken, welche zur Pflege in ein Hausgerät eingebracht sind, wobei der Messvorrichtung zwei Elektroden 3, 4 zugeordnet sind. Mittels der Elektroden 3, 4 ist der elektrische Widerstand der Wäschestücke an die Messvorrichtung koppelbar. Die Messvorrichtung weist einen Ausgang 5 auf, an dem ein Ausgangssignal (U_{A}) bereitstellbar ist, dessen Frequenz von dem Widerstand der Wäschestücke abhängig ist, wobei anhand der Frequenz der Widerstand bestimmbar ist.

## Beschreibung

Die vorliegende Erfindung betrifft eine Messvorrichtung zum Bestimmen eines elektrischen Widerstands von Wäschestücken, welche zur Pflege in ein Hausgerät eingebracht sind, wobei der Messvorrichtung zwei Elektroden zugeordnet sind. Des Weiteren betrifft die Erfindung ein entsprechendes Verfahren.

Zum Bestimmen eines Feuchtigkeitsgrads von Wäschestücken in einem Hausgerät sind aus dem Stand der Technik mehrere physikalische Prinzipien bekannt. Unter anderem kommt eine Widerstandsmessung bzw. Leitwertmessung der Wäschestücke mit Hilfe von Elektroden zum Einsatz. Zum Bestimmen des Widerstands der Wäschestücke sind elektrisch gesehen verschiedenste Möglichkeiten gegeben. Zum einen kann der Widerstand der Wäschestücke mit Hilfe eines Gleichstroms, der aufgrund einer an den Elektroden anliegenden Gleichspannung durch die Wäschestücke fließt, ermittelt werden. An diesem aus dem Stand der Technik bekannten Verfahren ist als nachteilig der Umstand anzusehen, dass durch das Anlegen einer Gleichspannung an die Elektroden eine so genannte Polarisationsspannung zwischen den Elektroden und den Wäschestücken gebildet wird. Diese, von dem Feuchtigkeitsgrad der Wäschestücke abhängige und aufgrund der galvanischen Effekte entstehende Polarisationsspannung verfälscht im Allgemeinen den gemessenen Wert des Widerstands. Neben der Widerstandsmessung kommt auch eine kapazitive Messung häufig zum Einsatz. Dabei dienen die Wäschestücke als Dielektrikum zwischen den isoliert angebrachten Elektroden, so dass die Kapazität zwischen den Elektroden durch den Feuchtigkeitsgrad der Wäschestücke bestimmt wird. Darüber hinaus kann der Feuchtigkeitsgrad der Wäschestücke durch eine Lufttemperaturmessung ermittelt werden. Dabei wird die Temperatur der Prozessluft in einem Abluft- oder Heizungsbereich ermittelt und der Temperaturverlauf zur Bestimmung des Feuchtigkeitsgrads herangezogen. Aus dem Stand der Technik sind außerdem auch hochfrequente Dämpfungsmessungen zur Bestimmung des Feuchtigkeitsgrads der Wäschestücke bekannt, bei denen ein Mikrowellenempfänger eine von einem Sender abgestrahlte HF-Energie misst. Die in den Wäschestücken absorbierte Leistung entspricht dem Trockengrad der Wäschestücke.

Vorliegend richtet sich das Interesse auf die Widerstandsmessung bzw. Leitwertmessung der Wäschestücke, bei denen der elektrische Widerstand für die Bestimmung des Feuchtigkeitsgrads der Wäschestücke herangezogen wird. Dazu wird auch verwiesen auf die Dokumente EP 0 942 094 B1 und WO 2004/059072 A1, deren Inhalte vorliegender Offenbarung jeweils vollumfänglich zuzurechnen sind.

Die Aufgabe der vorliegenden Erfindung besteht darin, eine Messvorrichtung sowie ein Verfahren zum Bestimmen eines elektrischen Widerstands von Wäschestücken zu schaffen, bei denen Maßnahmen getroffen sind, die gewährleisten, dass eine verbesserte Genauigkeit und Zuverlässigkeit der Messung erzielt wird.

Diese Aufgabe wird erfindungsgemäß durch eine Messvorrichtung sowie durch ein Verfahren mit den Merkmalen des jeweils entsprechenden unabhängigen Patentanspruchs gelöst. Bevorzugte Weiterbildungen der Messvorrichtung und des Verfahrens jeweils gemäß der Erfindung sind Gegenstände entsprechender abhängiger Patentansprüche oder nachfolgend erläutert. Außerdem entsprechen bevorzugten Weiterbildungen der Messvorrichtung auch bevorzugte Weiterbildungen des Verfahrens im Rahmen dessen, was technisch möglich ist, und dies auch dann, wenn darauf hierin nicht explizit hingewiesen ist.

Einer erfindungsgemäßen Messvorrichtung zum Bestimmen eines elektrischen Widerstands von Wäschestücken, welche zur Pflege in ein Hausgerät eingebracht sind, sind zwei Elektroden zugeordnet, wobei mittels der Elektroden der elektrische Widerstand der Wäschestücke an die Messvorrichtung koppelbar ist. Dabei weist die Messvorrichtung einen Ausgang auf, an dem ein Ausgangssignal bereitstellbar ist, dessen Frequenz von dem Widerstand der Wäschestücke abhängig ist, und anhand der Frequenz der Widerstand bestimmbar ist. Anstelle der Frequenz kann zum Bestimmen des elektrischen Widerstands auch eine andere äquivalente Signalgröße, insbesondere eine Periode, eine Impulsdauer und/oder eine Phase des Ausgangssignals, herangezogen werden.

Ein Grundgedanke der vorliegenden Erfindung besteht darin, dass an einem Ausgang der Messvorrichtung ein Ausgangssignal mit einer von dem Widerstand der Wäschestücke abhängigen Frequenz ausgebbar ist und anhand der Frequenz der Widerstand zu bestimmen ist. In vorteilhafter Weise wird durch die erfindungsgemäße Messvorrichtung erreicht, dass an die Elektroden keine Gleichspannung, sondern eine eine Frequenz aufweisende Spannung angelegt wird. Durch eine derartige DC-freie Messung wird erzielt, dass keine galvanischen Effekte zwischen den Elektroden und den Wäschestücken auftreten, so dass keine ungewollte Polarisationsspannung, die im Allgemeinen eine Verfälschung der Messung zur Folge hat, in Betracht gezogen werden muss. Somit wird gewährleistet, dass zwischen den Elektroden ausschließlich eine zur Messung des Widerstands relevante Wäschespannung abfällt.

Vorzugsweise sind anhand des Widerstands der Wäschestücke ein momentaner Feuchtigkeitsgrad der Wäschestücke und/oder eine restliche Trockenzeit eines Trocknungsprozesses abhängig vom Trocknungsprogramm bestimmbar. Ist der momentane Widerstand der Wäschestücke bekannt, so kann daraus in vorteilhafter Weise der momentane Feuchtigkeitsgrad bzw. die verbleibende Trockenzeit ermittelt werden.

Vorzugsweise ist der Messvorrichtung ein Frequenzbestimmungskondensator zugeordnet, wobei die Frequenz des Ausgangssignals durch eine Aufladezeit des Frequenzbestimmungskondensators bestimmbar ist, und die Aufladezeit durch den Widerstand der Wäschestücke bestimmbar ist. Insbesondere kann der Frequenzbestimmungskondensator an die Messvorrichtung derart geschaltet werden, dass entweder eine proportionale oder umgekehrt proportionale Abhängigkeit der Ausgangsfrequenz von dem Widerstand der Wäschestücke erreicht wird. Ist die Menge an über den Frequenzbestimmungskondensator fließenden Strom durch eine geschickte Schaltung von dem Widerstand der Wäschestücke abhängig, so definiert der Widerstand der Wäschestücke die Aufladezeit des Frequenzbestimmungskondensators und damit den Verlauf der an dem Frequenzbestimmungskondensator abfallenden Spannung.

Bevorzugt umfasst die Messvorrichtung eine Oszillatorschaltung mit einem Operationsverstärker. Insbesondere weist der Operationsverstärker einen positiven sowie einen negativen Eingang und einen Ausgang auf. In bevorzugter Weise ist der Operationsverstärker als ein Komparator ausgebildet, welcher durch eine Schalthysterese charakterisierbar ist und an dem Ausgang des Operationsverstärkers eine das Ausgangssignal der Messvorrichtung zumindest mittelbar definierende Ausgangsspannung in Abhängigkeit einer Spannungsdifferenz zwischen an den Eingängen des Operationsverstärkers anliegenden Spannungen ausgebbar ist, wobei durch die Schalthysterese zwei Ausgangsspannungen sowie zwei Schwellspannungen definiert sind. Insbesondere kann der Operationsverstärker als ein analoger Komparator mit Mitkoppelung, beispielsweise als ein Schmitt-Trigger, ausgebildet sein. Durch den als Komparator ausgebildeten Operationsverstärker wird gewährleistet, dass zwei Spannungswerte am Ausgang des Operationsverstärkers in Abhängigkeit von der Spannungsdifferenz zwischen den an den Eingängen anliegenden Spannungen ausgebbar sind. Insbesondere, wenn die Spannungsdifferenz am Eingang des Operationsverstärkers eine obere Schwellspannung überschreitet, kippt die Ausgangsspannung von einer maximalen Spannung auf eine minimale Spannung. Hingegen, wenn die Spannungsdifferenz am Eingang eine untere Schwellspannung unterschreitet, so kippt die Ausgangsspannung zurück auf die maximale Spannung. Am Ausgang des Operationsverstärkers wird somit eine rechteckförmige Spannung erzielt, was insbesondere Vorteile für eine Pulsdauermessung zur Folge hat.

In einer besonders bevorzugten Ausgestaltung der erfindungsgemäßen Messvorrichtung ist der Ausgang des Operationsverstärkers mit seinem negativen Eingang über den zu bestimmenden Widerstand der Wäschestücke gekoppelt. Dadurch beeinflusst der Widerstand der Wäschestücke die an dem negativen Eingang anliegende Spannung, wodurch eine Abhängigkeit der Frequenz der Ausgangsspannung erzielt wird.

Bevorzugt ist der negative Eingang mit einem Bezugspotential einer Gleichspannungsquelle mittels eines Frequenzbestimmungskondensators gekoppelt. Insbesondere ist der Frequenzbestimmungskondensator ausgelegt, durch ein Variieren seiner Aufladezeit eine Änderungsfrequenz der an dem negativen Eingang des Operationsverstärkers anliegenden Spannung zu variieren und somit die Frequenz des Ausgangssignals zu beeinflussen. Dadurch, dass der negative Eingang des Operationsverstärkers über den zu bestimmenden Widerstand der Wäschestücke mit dem Ausgang gekoppelt ist, und der gleiche negative Eingang über den Frequenzbestimmungskondensator mit dem Bezugspotential der Gleichspannungsquelle verbunden ist, bestimmt der Widerstand der Wäschestücke die Menge des über den Frequenzbestimmungskondensator fließenden Stroms und dadurch die Aufladezeit des Frequenzbestimmungskondensators. Somit steigt die an dem negativen Eingang des Operationsverstärkers anliegende Spannung abhängig von dem Widerstand der Wäschestücke an, wodurch ferner die Spannungsdifferenz an den Eingängen und die Frequenz der Ausgangsspannung bestimmt wird.

In einer weiteren Ausführung ist der Ausgang des Operationsverstärkers bevorzugt mit seinem positiven Eingang über einen ersten Schwellbestimmungswiderstand gekoppelt, wobei der positive Eingang des Operationsverstärkers in bevorzugter Weise mit einer Gleichspannungsquelle mittels eines Spannungsteilers gekoppelt ist. Vorzugsweise weist der Spannungsteiler einen den positiven Eingang des Operationsverstärkers mit einem positiven Potential der Gleichspannungsquelle koppelnden ersten Spannungsteilerwiderstand und einen den positiven Eingang mit dem Bezugspotential der Gleichspannungsquelle koppelnden zweiten Spannungswiderstand auf. Zwischen einem Spannungsteiler-Pol des Spannungsteilers und dem positiven Eingang des Operationsverstärkers ist bevorzugt ein zweiter Schwellbestimmungswiderstand angeordnet. Insbesondere können die Schwellbestimmungswiderstände zur Bestimmung der Schwellspannungen herangezogen werden. Somit wird erreicht, dass die Frequenz des Ausgangssignals durch die zwei Schwellbestimmungswiderstände beeinflussbar ist, wodurch eine genauere Frequenzmessung erzielt wird. Durch den ersten und zweiten Spannungsteilerwiderstand wird die an dem positiven Eingang des Operationsverstärkers anliegende Spannung und dadurch die Differenz zwischen den Eingangsspannungen bestimmt. Insbesondere kann der erste Spannungsteilerwiderstand kleiner als der zweite Spannungsteilerwiderstand sein, so dass an dem positiven Eingang des Operationsverstärkers eine positive Spannung anliegt.

Die Schwellspannungen sind bevorzugt in Abhängigkeit der Schwellbestimmungswiderstände ermittelbar.

In einer bevorzugten Ausführungsform der Messvorrichtung ist der Operationsverstärker zur Energieversorgung mit einer Gleichspannungsquelle verbunden, wobei die Gleichspannungsquelle nur positives Potential aufweist, das von einem Bezugspotential des Hausgeräts zur Pflege von Wäschestücken verschieden ist, und die Gleichspannungsquelle von dem Hausgerät galvanisch entkoppelt ist. Somit weist die Gleichspannungsquelle zur Versorgung der Messvorrichtung und die Messvorrichtung selbst eine Potentialtrennung zur restlichen Elektronik des Hausgeräts auf, wodurch der erforderliche Berührungsschutz gegeben ist.

Alternativ kann vorgesehen sein, dass der Ausgang des Operationsverstärkers mit einem Ausgangs-Pol über einen Ausgangswiderstand gekoppelt ist, wobei ein Frequenzbestimmungskondensator zwischen dem Ausgangs-Pol und dem Bezugspotential einer Gleichspannungsquelle geschaltet ist. Vorzugsweise ist der Frequenzbestimmungskondensator mit dem Ausgangs-Pol über einen Frequenzbestimmungs-Pol gekoppelt, wobei zwischen dem Ausgangs-Pol und dem Frequenzbestimmungs-Pol ein Zwischenpolwiderstand geschaltet ist. Bevorzugt ist der Frequenzbestimmungs-Pol mit dem negativen Eingang des Operationsverstärkers über einen Eingangswiderstand gekoppelt. Parallel zu dem Frequenzbestimmungskondensator und dem Zwischenpolwiderstand ist in bevorzugter Weise der zu bestimmende Widerstand der Wäschestücke geschaltet. Dadurch ist der Frequenzbestimmungskondensator ausgelegt, durch eine von dem Widerstand der Wäschestücke aufgrund der Parallelschaltung abhängige Aufladezeit die Änderungsfrequenz der an dem negativen Eingang des Operationsverstärkers anliegenden Spannung zu variieren und somit die Frequenz des Ausgangssignals zu verändern, wobei die Aufladezeit und die Frequenz des Ausgangssignals proportional zu dem zu bestimmenden Widerstand der Wäschestücke sind. Ist der Widerstand der Wäschestücke groß, so steigt die Menge an durch den Frequenzbestimmungskondensator fließenden Strom an, wodurch eine schnellere Aufladezeit des Kondensators erzielt wird.

In einer weiteren bevorzugten Ausgestaltung ist die Messvorrichtung über eine Signalübertragungsvorrichtung mit einer externen Auswerteeinheit zur Auswertung des Ausgangssignals gekoppelt. Bevorzugt ist die Signalübertragungsvorrichtung ein Optokoppler, mittels welchem das Ausgangssignal über einen von der Messvorrichtung galvanisch entkoppelten Stromkreis an die externe Auswerteeinheit übertragbar ist. Insbesondere stellt die externe Auswerteeinheit einen zentralen Mikrokontroller des Hausgeräts dar. Somit wird erreicht, dass für die erfindungsgemäße Messvorrichtung kein eigener Mikrokontroller erforderlich ist, wodurch eine besonders bauteilreduzierte und kostenreduzierte Messvorrichtung geschaffen wird. Durch den Optokoppler wird eine Übertragung des Ausgangssignals an die von der Messvorrichtung galvanisch entkoppelte Auswerteeinheit ermöglicht, was eine genaue Frequenzmessung zur Folge hat.

Ein erfindungsgemäßes Verfahren ist zum Bestimmen eines Widerstands von Wäschestücken, welche zur Pflege in ein Hausgerät eingebracht werden, ausgelegt. Bei dem erfindungsgemäßen Verfahren wird der Widerstand der Wäschestücke mit Hilfe einer Messvorrichtung bestimmt, welcher zwei Elektroden zugeordnet werden. Dabei wird mittels der Elektroden der elektrische Widerstand der Wäschestücke an die Messvorrichtung gekoppelt, und an einem Ausgang der Messvorrichtung ein Ausgangssignal bereitgestellt, dessen Frequenz von dem Widerstand der Wäschestücke abhängig ist, wobei anhand der Frequenz der Widerstand bestimmt wird. Anstelle der Frequenz kann der Widerstand auch anhand einer äquivalenten Signalgröße des Ausgangssignals, insbesondere anhand einer Periode, einer Pulsdauer und/oder einer Phase des Ausgangssignals, bestimmt werden.

Anhand des Widerstands der Wäschestücke werden bevorzugt ein momentaner Feuchtigkeitsgrad der Wäschestücke und/oder eine restliche Trockenzeit eines Trocknungsprozesses abhängig vom Trocknungsprogramm bestimmt.

In bevorzugter Weise wird in der Messvorrichtung eine Oszillatorschaltung mit einem Operationsverstärker angeordnet. Bevorzugt wird der Operationsverstärker als ein Komparator ausgebildet und durch eine Schalthysterese charakterisiert, wobei an einem Ausgang des Operationsverstärkers eine das Ausgangssignal der Messvorrichtung zumindest mittelbar definierende Ausgangsspannung in Abhängigkeit einer Spannungsdifferenz zwischen an zwei Eingängen des Operationsverstärkers anliegenden Spannungen ausgegeben wird und durch die Schalthysterese zwei Ausgangsspannungen sowie zwei Schwellspannungen definiert werden.

Bei dem erfindungsgemäßen Verfahren kann die Frequenz des Ausgangssignals bevorzugt durch eine Aufladezeit eines Frequenzbestimmungskondensators bestimmt werden, wobei die Aufladezeit durch den Widerstand der Wäschestücke bestimmt wird.

In bevorzugter Weise wird am Ausgang der Messvorrichtung mittels eines Optokopplers das Ausgangssignal an einen galvanisch entkoppelten Stromkreis übertragen.

Die mit Bezug auf die erfindungsgemäße Messvorrichtung erläuterten bevorzugten Ausführungsformen und insbesondere deren Vorteile gelten entsprechend für das erfindungsgemäße Verfahren.

Weitere Vorteile, Merkmale und Einzelheiten der Erfindung ergeben sich aus der nachfolgenden Beschreibung einzelner bevorzugter Ausführungsbeispiele sowie anhand der Zeichnungen. Dabei zeigen:
- Fig. 1: einen Schaltplan einer erfindungsgemäßen Messvorrichtung zum Bestimmen eines elektrischen Widerstands von Wäschenstücken gemäß einem ersten Ausführungsbeispiel;
- Fig. 2: einen Schaltplan der erfindungsgemäßen Messvorrichtung zum Bestimmen des elektrischen Widerstands der Wäschestücke gemäß einem zweiten Ausführungsbeispiels;
- Fig. 3: eine Kennlinie eines als Komparator ausgebildeten Operationsverstärkers in Form einer Hysterese.

In den Figuren werden gleiche oder funktionsgleiche Elemente mit den gleichen Bezugszeichen versehen.

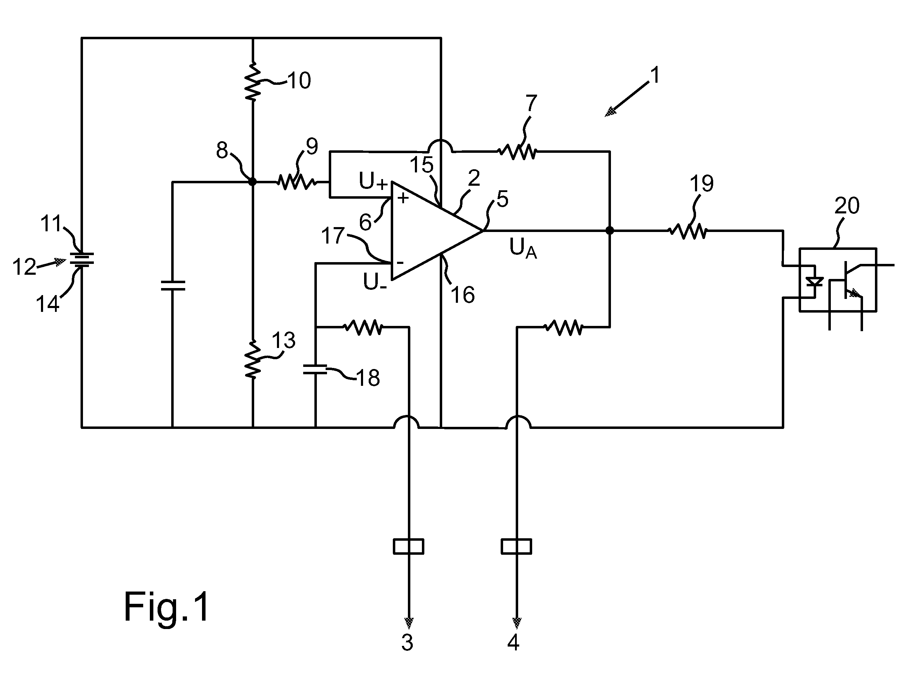

Eine in Fig. 1 wiedergegebene Messvorrichtung gemäß einem ersten Ausführungsbeispiel ist zum Bestimmen eines elektrischen Widerstands von Wäschestücken, welche zur Pflege in ein Hausgerät eingebracht sind, ausgebildet. Das Hausgerät zur Pflege von Wäschestücken kann ein Trockner oder ein Waschtrockner sein.

Die Messvorrichtung umfasst eine Oszillatorschaltung 1 mit einem in diesem Ausführungsbeispiel als ein analoger Komparator mit Mitkoppelung ausgebildeten Operationsverstärker 2. Der Operationsverstärker 2 kann hier in Form eines Schmitt-Triggers ausgebildet sein. Die Messvorrichtung weist des Weiteren zwei Elektroden 3, 4 auf, die beispielsweise an einer die Wäschestücke aufnehmenden Trommel des Hausgeräts isoliert voneinander angeordnet sind und die Aufgabe haben, den Widerstand der Wäschestücke an die Messvorrichtung zu koppeln. Wird an die Elektroden 3, 4 eine Spannung angelegt, so verursacht der Widerstand der Wäschestücke einen durch die Elektroden 3, 4 fließenden Strom. Wie aus Fig. 1 zu erkennen ist, ist ein Ausgang 5 des Operationsverstärkers 2 mit seinem positiven Eingang 6 mittels eines ersten Schwellbestimmungswiderstands 7 gekoppelt. Außerdem ist der positive Eingang 6 des Operationsverstärkers 2 mit einem Spannungsteiler-Pol 8 über einen zweiten Schwellbestimmungswiderstand 9 gekoppelt, wobei der Spannungsteiler-Pol 8 über einen ersten Spannungsteilerwiderstand 10 und über einen zweiten Spannungsteilerwiderstand 13 mit einer unsymmetrischen Gleichspannungsquelle 12 gekoppelt ist. Der erste Spannungsteilerwiderstand 10 ist vorzugsweise mit dem positiven Pol der Gleichspannungsquelle 12 verbunden. Des Weiteren ist die Gleichspannungsquelle 12 ausgelegt, um den Operationsverstärker 2 mit elektrischer Energie zu versorgen. Der Operationsverstärker 2 weist dazu zwei Versorgungseingänge 15, 16 auf. Der negative Versorgungseingang 16 des Operationsverstärkers 2 ist mit dem Bezugspotential 21 verbunden. Dieses Bezugspotential 21 ist dasjenige Potential der Schaltung, welches mit einem Minuspol 14 der Gleichspannungsquelle 12 verbunden ist. Dabei entspricht dieses schaltungstechnische Bezugspotential 21 nicht dem gerätetechnischen Bezugspotential 22, welches dem Potential des Elektrodeneingangs 4 entspricht.

Wie aus Fig. 1 ferner zu erkennen ist, ist der Ausgang 5 des Operationsverstärkers 2 über den mittels der Elektroden 3, 4 gekoppelten Widerstand der Wäschestücke mit einem negativen Eingang 17 des Operationsverstärkers 2 gekoppelt. Der negative Eingang 17 des Operationsverstärkers 2 ist darüber hinaus mit dem Bezugspotential 21 der Schaltung über einen Frequenzbestimmungskondensator 18 gekoppelt.

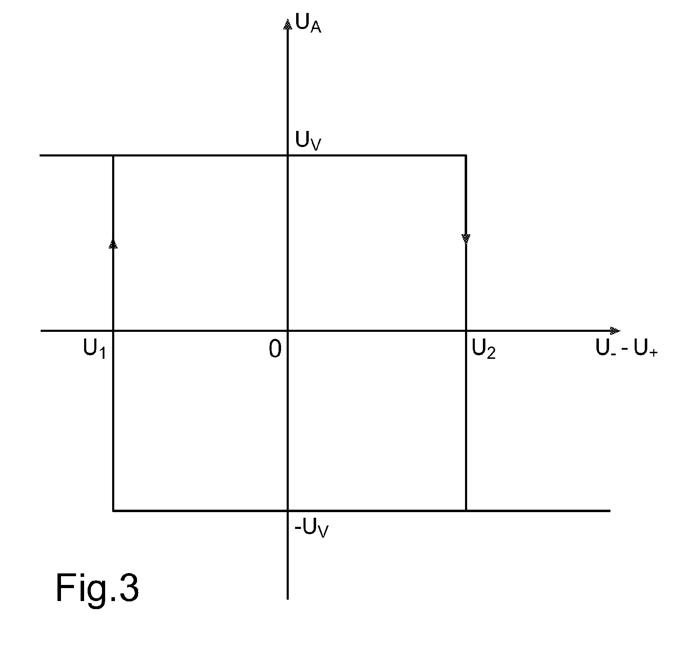

Wie bereits erwähnt, ist der Operationsverstärker 2 in diesem Ausführungsbeispiel als ein analoger Komparator ausgebildet. Zur Bestimmung der Ausgangsspannung am Ausgang 5 wird hierbei eine Spannungsdifferenz zwischen den an dem Eingang 6 und dem Eingang 17 anliegenden Spannungen in Betracht gezogen. Der Operationsverstärker 2 arbeitet als Vergleicher für die an den Eingängen 6, 17 anliegenden Spannungen. Eine dem Operationsverstärker 2 zugrunde liegende Kennlinie ist in Form einer Hysterese in Fig. 3 wiedergegeben. Dargestellt ist die Abhängigkeit der Ausgangsspannung U_{A} am Ausgang 5 des Operationsverstärkers 2 von der Spannungsdifferenz zwischen den Spannungen U₊ und U₋, die an den Eingängen 6 bzw. 17 des Operationsverstärkers 2 anliegen. Erreicht die Spannungsdifferenz U₋ - U₊ eine vorbestimmte Schwellspannung U₁, liegt an dem Ausgang 5 des Operationsverstärkers 2 eine Spannung U_{V} an. Überschreitet die Spannungsdifferenz U₋ - U₊ eine vorbestimmte obere Schaltschwelle U₂, so kippt die Ausgangsspannung U_{A} von der Spannung U_{V} auf eine Spannung - U_{V}. Somit sind am Ausgang 5 des Operationsverstärkers 2 zwei Spannungswerte möglich: U_{V} und - U_{V}. In diesem Ausführungsbeispiel verläuft somit die Ausgangsspannung U_{A} des Operationsverstärkers 2 unsymmetrisch. Dabei entspricht die Ausgangsspannung U_{V} optimal der Versorgungsspannung der Gleichspannungsquelle 12. Die Spannung U_{V} erreicht optimal den Wert des Bezugspotentials 21. Es sei an dieser Stelle ferner angemerkt, dass die Schwellspannungen U₁, U₂ in Abhängigkeit des ersten und des zweiten Schwellbestimmungswiderstands 7, 9 ermittelt werden. Somit können die Werte der Schwellspannungen U₁, U₂ in der Messvorrichtung vordefiniert werden.

Schaltet man die Gleichspannungsquelle 12 an, so liegt an dem Spannungsteiler-Pol 8 eine Spannung an, und zwar abhängig von den Spannungsteilerwiderständen 10, 13. Ist beispielsweise der erste Spannungsteilerwiderstand 10 kleiner als der zweite Spannungsteilerwiderstand 13, so ist die an dem positiven Eingang 6 des Operationsverstärkers 2 anliegende Spannung U₊ positiv. Zu diesem Zeitpunkt liegt an dem negativen Eingang 17 des Operationsverstärkers 2 keine Spannung an, so dass U₋ = 0. Am Ausgang 5 des Operationsverstärkers 2 liegt somit eine Spannung U_{A} = U_{V}.

Aufgrund der Rückkopplung des Ausgangs 5 des Operationsverstärkers 2 mit dem negativen Eingang 17 über den Widerstand der Wäschestücke liegt nunmehr an dem negativen Eingang 17 eine Spannung U- an, und zwar abhängig von dem Widerstand der Wäschestücke. Weil die Spannungsdifferenz U₋ - U₊ größer als 0 beträgt, insbesondere die Schwellenspannung U₂ erreicht hat, kippt die Ausgangsspannung U_{A} am Ausgang 5 des Operationsverstärkers 2 von der Spannung U_{V} auf das Bezugspotential 21. Dabei wird die Schwingungsfrequenz der Oszillatorschaltung 1 neben dem Widerstand der Wäschestücke auch durch den Frequenzbestimmungskondensator 18 bestimmt. Beträgt die Ausgangsspannung U_{A} am Ausgang 5 U_{V}, so wird der Frequenzbestimmungskondensator 18 aufgrund der Potentialdifferenz zwischen dem negativen Eingang 17 des Operationsverstärkers 2 und dem negativen Potential 14 der Gleichspannungsquelle 12 aufgeladen. Je größer der Widerstand der Wäschestücke ist, desto länger ist die Aufladezeit des Frequenzbestimmungskondensators 18 bzw. desto kleiner ist die Frequenz der Ausgangsspannung U_{A}.

Der Ausgang 5 des Operationsverstärkers 2 ist darüber hinaus über einen Ausgangswiderstand 19 mit einem Optokoppler 20 gekoppelt. Anstelle des Optokopplers 20 kann auch eine andere Signalübertragungsvorrichtung vorgesehen sein, wie beispielsweise ein Transformator, ein Kondensator oder dergleichen. Der Optokoppler 20 hat die Aufgabe, die Ausgangsspannung U_{A} an einen von der Messvorrichtung galvanisch entkoppelten Stromkreis zu übertragen. In diesem Ausführungsbeispiel wird die Ausgangsspannung U_{A} über den Optokoppler 20 an einen externen Mikrokontroller, insbesondere einen in dem Hausgerät zentralen Mikrokontroller übertragen. Der Mikrokontroller bzw. eine derartige Auswerteeinheit ist in der Lage, die Ausgangsspannung U_{A} auszuwerten, insbesondere die Frequenz der Ausgangsspannung U_{A}, und daraus den Widerstand der Wäschestücke zu ermitteln.

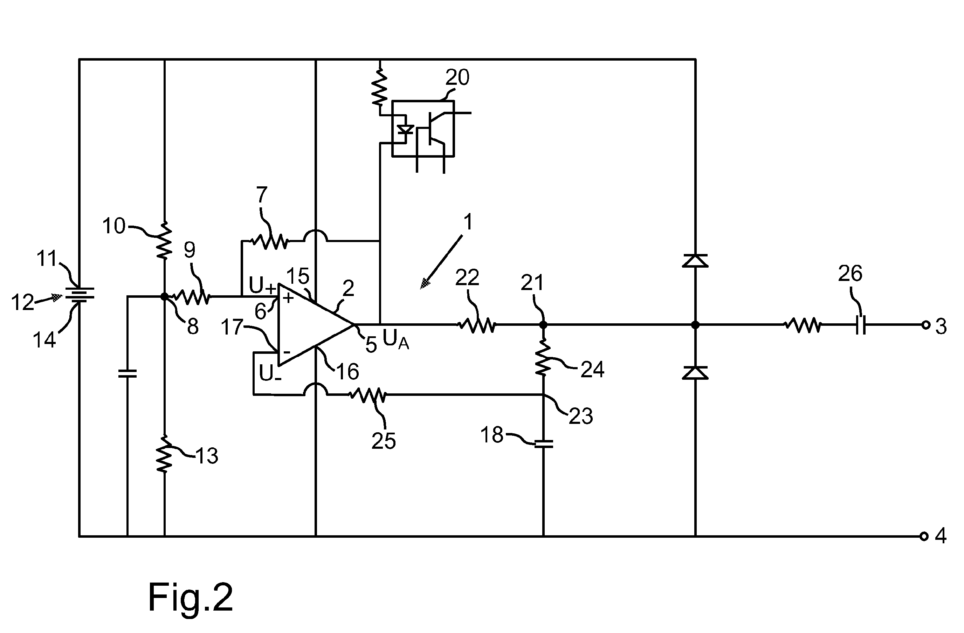

In Fig. 2 ist eine Messvorrichtung zum Bestimmen eines elektrischen Widerstands von Wäschestücken, welche zur Pflege in ein Hausgerät eingebracht sind, gemäß einem zweiten Ausführungsbeispiel gezeigt.

Die in Fig. 2 wiedergegebene Messvorrichtung umfasst entsprechend die Oszillatorschaltung 1, welche ferner, wie in dem ersten Ausführungsbeispiel gemäß Fig. 1, den Operationsverstärker 2 aufweist. In gleicher Weise ist der Ausgang 5 des Operationsverstärkers 2 mit seinem positiven Eingang 6 über den Schwellbestimmungswiderstand 7 gekoppelt, wobei der positive Eingang 6 des Weiteren über den zweiten Schwellbestimmungswiderstand 9 mit dem Spannungsteiler-Pol 8 gekoppelt ist. Der Spannungsteiler-Pol 8 ist über den ersten Spannungsteilerwiderstand 10 mit dem positiven Potential 11 der Gleichspannungsquelle 12 sowie über den zweiten Spannungsteilerwiderstand 13 mit dem negativen Potential 14 der Gleichspannungsquelle 12 gekoppelt.

In diesem Ausführungsbeispiel ist der Ausgang 5 des Operationsverstärkers 2 mit einem Ausgangs-Pol 21 über einen Ausgangswiderstand 22 gekoppelt, wobei ein Frequenzbestimmungskondensator 18 zwischen dem Ausgangs-Pol 21 und dem Bezugspotential 14 der Gleichspannungsquelle 12 geschaltet ist. Dabei ist ferner der Frequenzbestimmungskondensator 18 mit dem Ausgangs-Pol 21 über einen Frequenzbestimmungs-Pol 23 und einen Zwischenpolwiderstand 24 gekoppelt. Aus Fig. 2 ist ferner zu erkennen, dass der Frequenzbestimmungs-Pol 23 mit dem negativen Eingang 17 des Operationsverstärkers 2 über einen Eingangswiderstand 25 gekoppelt ist. Des Weiteren sind die Elektroden 3, 4 an die Messvorrichtung derart geschaltet, dass der zu bestimmende Widerstand der Wäschestücke an die Messvorrichtung parallel zu dem Frequenzbestimmungskondensator 18 und dem Zwischenpolwiderstand 24 gekoppelt wird. Hierzu ist seriell zu dem Widerstand der Wäschestücke ein Elektrodenkondensator 26 geschaltet. Mittels dieses Elektrodenkondensators 26 wird jedwedes Gleichstromsignal von den Elektroden 3 und 4 ferngehalten; die Messung erfolgt ausschließlich mit Wechselstrom. Dadurch wird eine Beeinflussung der Messung durch galvanische oder elektrolytische Effekte vermieden. Zweckmäßig hat der Elektrodenkondensator 26 eine wesentlich größere Kapazität als der Frequenzbestimmungskondensator 18; so bleibt sein Einfluss auf die Frequenz gering oder, noch besser, vernachlässigbar. Wäre eine galvanische Entkopplung der Elektroden 3 und 4 von den übrigen Teilen der Schaltung gewünscht, so müsste in Reihe vor die Elektrode 4 noch ein weiterer Kondensator entsprechend dem Elektrodenkondensator 26 vor der Elektrode 3 eingefügt werden.

Wird die den Operationsverstärker 2 mit elektrischer Energie versorgende Gleichspannungsquelle 12 eingeschaltet, so liegt an dem Spannungsteiler-Pol 8 in gleicher Weise wie im ersten Ausführungsbeispiel eine Spannung an. Ist der Widerstandswert des ersten Spannungsteilerwiderstands 10 kleiner als der des zweiten Spannungsteilerwiderstands 13, so ist die an dem positiven Eingang 6 des Operationsverstärkers 2 anliegende Spannung U₊ positiv. Aufgrund der dem Operationsverstärker 2 zugrunde liegenden Kennlinie von Fig. 3 liegt zu diesem Zeitpunkt eine Spannung U_{V} am Ausgang 5 des Operationsverstärkers 2, so dass U_{A} = U_{V}. Liegt am Ausgang 5 des Operationsverstärkers 2 eine Spannung an, so fließt über den Frequenzbestimmungskondensator 18 Strom. Je größer der Widerstand der Wäschestücke zwischen den Elektroden 3, 4 ist, desto größer ist der durch den Frequenzbestimmungskondensator 18 fließende Strom. Dadurch ist die Aufladezeit des Frequenzbestimmungskondensators 18 proportional zu dem Widerstand der Wäschestücke. In dem zweiten Ausführungsbeispiel gilt damit, dass die Frequenz der Ausgangsspannung U_{A} proportional zu dem Widerstand der Wäschestücke ist. Beträgt die Ausgangsspannung am Ausgang 5 des Operationsverstärkers 2 den Wert U_{V}, so steigt die an dem negativen Eingang 17 des Operationsverstärkers 2 anliegende Spannung U₋ an. Erreicht die Spannungsdifferenz U₋ - U₊ die Schwellenspannung U₂, kippt die Ausgangsspannung U_{A} von der maximalen Spannung U_{V} auf 0V Bezugspotential 21. Und wiederum ist die Änderungsfrequenz der an dem negativen Eingang 17 des Operationsverstärkers 2 anliegenden Spannung U- abhängig von der Aufladezeit des Frequenzbestimmungskondensators 18. Zu einem Zeitpunkt, zu dem die Ausgangsspannung U_{A} = U_{V} ist, wird der Frequenzbestimmungskondensator 18 aufgeladen. Sobald der Frequenzbestimmungskondensator 18 auf geladen ist, fließt durch den Frequenzbestimmungskondensator 18 kein Strom mehr, so dass die an dem Frequenzbestimmungskondensator 18 anliegende Spannung konstant bleibt. Wird die Ausgangsspannung U_{A} von U_{V} auf 0V Bezugspotential 21 gekippt, so wird der Frequenzbestimmungskondensator 18 entladen und der Stromfluss ermöglicht.

Entsprechend ist in dem zweiten Ausführungsbeispiel der Ausgang 5 des Operationsverstärkers 2 mit dem Optokoppler 20 gekoppelt, um die Ausgangsspannung U_{A} an den von der Messvorrichtung galvanisch entkoppelten Stromkreis zu übertragen.

Durch die anhand von zwei Ausführungsbeispielen oben beschriebene Messvorrichtung wird eine genaue und zuverlässige Messung des Widerstands der Wäschestücke anhand der Frequenz des Ausgangssignals erzielt. Insbesondere durch eine symmetrische Auslegung der Ausgangsspannung U_{A} gegenüber dem gerätetechnischen Bezugspotential 22 im ersten Ausführungsbeispiel, also durch eine symmetrische Schwingung der Oszillatorschaltung 1, wird erreicht, dass sich kein Gleichspannungsanteil an den Messelektroden 3 und 4 bildet. Durch diese gleichspannungsfreie Kopplung unter Zuhilfenahme des Koppelkondensators 26 der Messelektroden 3 und 4 im zweiten Ausführungsbeispiel wird ebenfalls das Einprägen eines Gleichstroms auf das zwischen den Elektroden 3 und 4 befindliche Messobjekt vermieden. Des Weiteren erfolgt die Messung der Frequenz auf der Grundlage einer eine beliebige Amplitude aufweisenden Ausgangsspannung U_{A}, so dass keine nichtlinearen Effekte auftreten können im Falle, dass eine Verstärkung der Ausgangsspannung benötigt wird. Darüber hinaus treten aufgrund der eine Frequenz aufweisenden, an den Elektroden 3, 4 angelegten Spannung keine galvanischen Effekte zwischen den Wäschestücken und den Elektroden 3, 4 auf. Dadurch sind keine negativen Polarisierungseffekte aufgrund der zwischen den Elektroden 3, 4 abfallenden Spannung zu erwarten, so dass keine Kompensationsrechnungen notwendig sind und ein geringerer Messfehler erreichbar ist. Schließlich kann durch die erfindungsgemäße Messvorrichtung, insbesondere durch die geschickte Widerstands-Frequenz-Wandlung ein großer Messbereich des Widerstands der Wäschestücke abgedeckt werden, weil kein Digital-AnalogWandler sowie keine Spannungsteiler zur Bestimmung der Amplitude vorgesehen sein müssen, welche im Allgemeinen begrenzte Auflösung aufweisen.

## Patentansprüche

1. Messvorrichtung zum Bestimmen eines elektrischen Widerstands von Wäschestücken, welche zur Pflege in ein Hausgerät eingebracht sind, wobei der Messvorrichtung zwei Elektroden (3, 4) zugeordnet sind, **dadurch gekennzeichnet, dass** mittels der Elektroden (3, 4) der elektrische Widerstand der Wäschestücke an die Messvorrichtung koppelbar ist, und die Messvorrichtung einen Ausgang (5) aufweist, an dem ein Ausgangssignal (U_{A}) bereitstellbar ist, dessen Frequenz von dem Widerstand der Wäschestücke abhängig ist, und anhand der Frequenz der Widerstand bestimmbar ist.

2. Messvorrichtung nach Anspruch 1, **dadurch gekennzeichnet, dass** anhand des Widerstands der Wäschestücke ein momentaner Feuchtigkeitsgrad der Wäschestücke und/oder eine restliche Trockenzeit eines Trocknungsprozesses abhängig vom Trocknungsprogramm bestimmbar sind.

3. Messvorrichtung nach Anspruch 1 oder 2, **dadurch gekennzeichnet, dass** der Messvorrichtung ein Frequenzbestimmungskondensator (18) zugeordnet ist, wobei die Frequenz des Ausgangssignals durch eine Aufladezeit des Frequenzbestimmungskondensators (18) bestimmbar ist, und die Aufladezeit durch den Widerstand der Wäschestücke bestimmbar ist.

4. Messvorrichtung nach einem der Ansprüche 1 bis 3, **dadurch gekennzeichnet, dass** die Messvorrichtung eine Oszillatorschaltung (1) mit einem Operationsverstärker (2) umfasst.

5. Messvorrichtung nach Anspruch 4, **dadurch gekennzeichnet, dass** der Operationsverstärker (2) als ein Komparator ausgebildet ist, welcher durch eine Schalthysterese charakterisierbar ist und an einem Ausgang (5) des Operationsverstärkers (2) eine das Ausgangssignal (U_{A}) der Messvorrichtung zumindest mittelbar definierende Ausgangsspannung (U_{A}) in Abhängigkeit einer Spannungsdifferenz (U₋ - U₊) zwischen an zwei Eingängen des Operationsverstärkers (6, 17) anliegenden Spannungen (U₋, U₊) ausgebbar ist, wobei durch die Schalthysterese zwei Ausgangsspannungen (U_{V}, -U_{V}) sowie zwei Schwellspannungen (U₁, U₂) definiert sind.

6. Messvorrichtung nach Anspruch 4 oder 5, **dadurch gekennzeichnet, dass** der Ausgang (5) des Operationsverstärkers (2) mit seinem negativen Eingang (17) über den zu bestimmenden Widerstand der Wäschestücke gekoppelt ist.

7. Messvorrichtung nach einem der Ansprüche 4 bis 6, **dadurch gekennzeichnet, dass** der negative Eingang (17) mit einem negativen Potential (14) einer Gleichspannungsquelle (12) mittels eines Frequenzbestimmungskondensators (18) gekoppelt ist.

8. Messvorrichtung nach einem der Ansprüche 4 bis 7, **dadurch gekennzeichnet, dass** der Ausgang (5) des Operationsverstärkers (2) mit seinem positiven Eingang (6) über einen ersten Schwellbestimmungswiderstand (7) gekoppelt ist.

9. Messvorrichtung nach einem der Ansprüche 4 bis 8, **dadurch gekennzeichnet, dass** der positive Eingang (6) des Operationsverstärkers (2) mit einer Gleichspannungsquelle (12) mittels eines Spannungsteilers (10, 13) gekoppelt ist.

10. Messvorrichtung nach einem der Ansprüche 4 bis 9, **dadurch gekennzeichnet, dass** der Operationsverstärker (2) zur Energieversorgung mit einer Gleichspannungsquelle (12) verbunden ist.

11. Messvorrichtung nach Anspruch 10, **dadurch gekennzeichnet, dass** die Gleichspannungsquelle (12) ein gegenüber einem Bezugspotential (14) positives Potential (11) aufweist, wobei das Bezugspotential (14) von einem Bezugspotential (22) des Hausgeräts zur Pflege von Wäschestücken verschieden ist, und die Gleichspannungsquelle (12) von dem Hausgerät galvanisch entkoppelt ist.

12. Messvorrichtung nach einem der Ansprüche 4 bis 11, **dadurch gekennzeichnet, dass** der Ausgang (5) des Operationsverstärkers (2) mit einem Ausgangs-Pol (21) über einen Ausgangswiderstand (22) gekoppelt ist, wobei ein Frequenzbestimmungskondensator (18) zwischen dem Ausgangs-Pol (21) und einem Bezugspotential (14) einer Gleichspannungsquelle (12) geschaltet ist.

13. Messvorrichtung nach einem der vorhergehenden Ansprüche, **dadurch gekennzeichnet, dass** die Messvorrichtung über eine Signalübertragungsvorrichtung (20) mit einer externen Auswerteeinheit zur Auswertung des Ausgangssignals (U_{A}) gekoppelt ist.

14. Messvorrichtung nach Anspruch 13, **dadurch gekennzeichnet, dass** die Signalübertragungsvorrichtung (20) ein Optokoppler (20) ist, mittels welchem das Ausgangssignal (U_{A}) über einen von der Messvorrichtung galvanisch entkoppelten Stromkreis an die externe Auswerteeinheit übertragbar ist.

15. Verfahren zum Bestimmen eines Widerstands von Wäschestücken, welche zur Pflege in ein Hausgerät eingebracht werden, **dadurch gekennzeichnet, dass** der elektrische Widerstand der Wäschestücke mittels Elektroden (3, 4) einer Messvorrichtung an die Messvorrichtung gekoppelt wird, und an einem Ausgang (3) der Messvorrichtung ein Ausgangssignal (U_{A}) bereitgestellt wird, dessen Frequenz von dem Widerstand der Wäschestücke abhängig ist, wobei anhand der Frequenz der Widerstand bestimmt wird.
